# EUROPEAN PATENT SPECIFICATION

(11) **EP 0 858 945 B1**
(45) Date of publication and mention of the grant of the patent: **27.12.2000**
(21) Application number: 98850019.5
(22) Date of filing: 10.02.1998
(51) Int. Cl.: B62D 55/26, B62D 55/28

(54) **A drive track for tracked vehicles**
Raupenkette für Gleiskettenfahrzeuge
Chenille de traction pour véhicules à chenilles

(30) Priority: 13.02.1997 SE 9700492
(43) Date of publication of application: 19.08.1998
(73) Proprietor: Trelleborg Viking AS, 3051 Mjondalen (NO)
(72) Inventor: Mork, John, 3055 Krokstadelva (NO)
(74) Representative: Lundin, Björn-Eric

(56) References cited:
- EP-A- 0 776 774
- SE-B- 338 930

## Description

The present invention relates to a drive track for tracked off-road vehicles that allows the vehicle to be driven in all types of terrain, including hilly terrains and wetlands, and on different types of underlying surfaces, such as asphalt, concrete, gravel, sand, stone, snow and icy surfaces, wherewith the track includes one or more endless, elastomeric traction elements and cross-ribs which are arranged generally equidistantly from one another transversely to said traction elements and outwardly therefrom, said cross-ribs being intended to contact the ground surface as the vehicle moves, wherein at least those parts of the cross-ribs that come into contact with the ground are comprised of polymeric material which is held and supported by a flexurally rigid material.

The track is intended primarily for tracked off-road vehicles with guided rear carriages, although it can also be used with a single track carriage having two tracks for terrain use.

The vehicle track described in the introduction is known to the art and functions to provide a vehicle with the smoothest possible supportive surface in forward movement of the vehicle, and also to transmit the forward propulsion generated by the engine to the underlying ground surface, via the vehicle drive wheels. The patterned design of the vehicle track enables driving and stability of the vehicle to be ensured, and the track shall also generally dampen the strain to which the vehicle is subjected when driven over bumpy and uneven ground. A vehicle track will usually comprise two endless traction elements (belts) made of rubber or some like polymeric material, and cross-ribs which are mounted transversely to the traction elements. These cross-ribs provide engagement for teeth on the drive wheels, while the outwardly directed ribs thereof ensure good contact with the ground surface. The propulsion force generated by the engine of the vehicle is transmitted to the track via a toothed wheel, said track transmitting the propulsion force to the ground surface through the cross-ribs, which make contact with the ground surface at given time intervals. Known vehicle tracks, such as the vehicle track described in SE-338930, have certain limitations and are not suitable for use in all types of terrain, such universal use being necessary at times, for instance in the case of military vehicles. One of the drawbacks with known, conventional tracks for tracked off-road vehicles is that they are too heavy in relation to the total weight of the vehicle, therewith requiring the use of unreasonably large and heavy engines in running the vehicle. The relatively large mass of the tracks and the need for powerful engines presents a problem with regard to acceleration of the vehicle, since a substantially larger total mass must be accelerated, or in other words both the drive tracks and the vehicle are difficult "to get going". A common feature of all conventional vehicle tracks of the kind described in the introduction is that the cross-ribs include a supportive device, also called reinforcement, in the form of an open metal profile, e.g. a U-profile or T-profile which is constructed to retain or hold the polymeric material mechanically on the one hand, i.e. that part of the cross-ribs that comes into contact with the ground, and to provide reinforcement that imparts a predetermined flexural rigidity to the cross-rib in a direction perpendicular to the traction element on the other hand. The cross-rib of conventional vehicle tracks is comprised of a metal bar which may have a U-shape or T-shape or some other open shape that varies in the longitudinal direction of the bar, and a polymeric bar which is held mechanically by the metal bar, either by being clamped therein or moulded in the polymeric bar. Seen in cross-section, the cross-ribs are thus completely filled with material, either metal or polymeric material, with the exception of those holes that are provided for accommodating fastener devices. An example of one such known cross-rib will be described in more detail below in conjunction with the description of the present invention.

The object of the present invention is to provide a vehicle track that has a considerably smaller mass than a conventional vehicle track of corresponding dimensions. Because of its reduced mass, and therewith smaller power requirements, the inventive vehicle track considerably improves the driving properties of a tracked vehicle, such as to enable the vehicle to be driven readily in all types of terrain, such as hilly terrain and in wetlands, without requiring the use of excessively heavy and powerful engines.

This object is achieved with a vehicle track that has the characteristic features set forth in the following Claims.

The inventive vehicle track thus comprises cross-ribs that include a supportive device which is comprised of a fully closed profile construction, i.e. a profile that is also closed at its respective ends. The polymeric material in the cross-ribs is disposed as an outer covering on the closed profile construction. The closed profile construction is conveniently produced from a material chosen from the group comprising high-quality steel, aluminium, magnesium or composite material. A normally preferred material in this respect is boron-alloyed high-tensile steel, although the cross-ribs may require other specific properties in respective different areas of use, in which case they can be made still lighter by using aluminium or magnesium profiles. An exclusively reinforced composite material may be the best material in very extreme conditions. Each cross-rib is conveniently provided with a fastener device for attaching the cross-rib to the traction element. The fastener device is conveniently a fastener bolt that is pre-adapted to the profile construction and welded or otherwise attached to the inner surface or outer surface of said profile construction. The polymeric material in the cross-ribs is suitably press-moulded around the closed profile, which is the simplest method of application, although the polymeric material may alternatively be applied in some other suitable way in particular cases. Each cross-rib will suitably include one flat surface and at least two inclined surfaces intended for abutment with corresponding surfaces on the traction element, wherewith said inclined abutment surfaces and corresponding surfaces on the traction element will suitably be constructed so as not to be fully parallel with one another, such as to enable a sealing tension force or wedge effect to be achieved in conjunction with said abutment. The cross-ribs are fastened in a manner which will enable the ribs to be replaced, e.g. when worn or when requiring to change the character of the vehicle track and adapt the track to different applications. The traction belt will also preferably be replaceable.

According to one preferred embodiment, the inventive vehicle track includes one or more traction elements that are press-moulded from an elastomeric material and have moulded therein an endless reinforcement comprised of a material that has a high tensile strength, such as aramide fibre material for instance, and pre-formed holes for receiving fastener devices, and cross-rib abutment surfaces and longitudinally extending guide edges which prevent the track from sliding sideways. The traction element has moulded in the vicinity of said holes support plates comprised of a resilient, hard material. The vehicle track also includes a plurality of generally equidistantly spaced cross-ribs which extend along the endless traction elements and outwardly therefrom and which are comprised of press-moulded polymeric material, wherewith the cross-ribs have abutment pads of press-moulded material in those parts of the ribs that come into contact with the ground, and a plurality of fastener devices which hold the cross-ribs steady and sealingly against the abutment surfaces provided on the traction element to this end, said fastener devices comprising a fastener bolt firmly anchored in the cross-rib and a closed-head fastener nut and, in applicable cases, a glue joint in the abutment surfaces between cross-rib and traction element.

This provides a fixed connection between the fastener surfaces and prevents the ingress of moisture and dirt between cross-rib and traction element. An abutment plate, suitably formed as guide means for support wheels on the vehicle track may be provided between fastener nut and traction element.

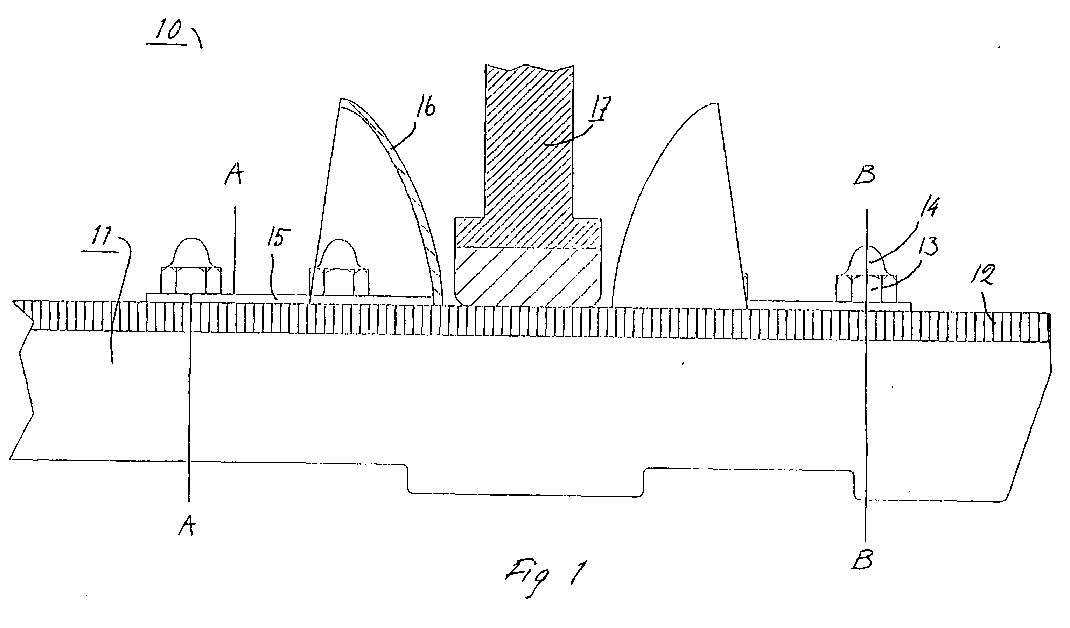

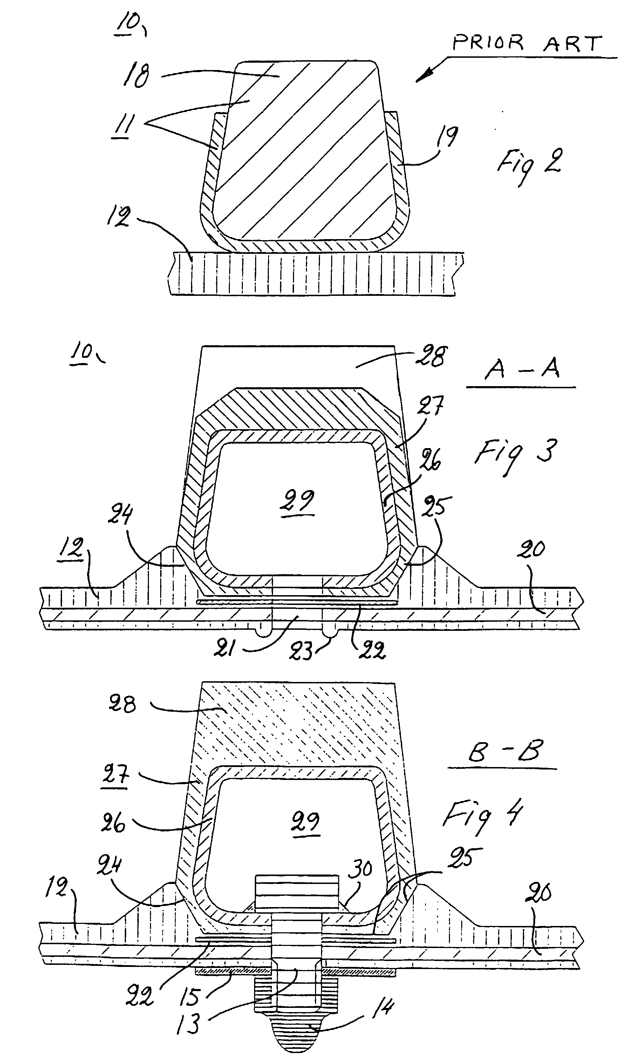

The invention will now be described in more detail with reference to the accompanying drawing, in which Figure 1 is a cross-sectional view of a vehicle track; Figure 2 is a cross-sectional view of a conventional cross-rib; and Figures 3 and 4 are sectional views of the vehicle track shown in Figure 1, taken respectively on the lines A-A and B-B in said Figure.

Figure 1 is a cross-sectional view taken along one cross-rib 11 of a vehicle track 10. The track 10 has a traction element 12 in the form of a press-moulded, endless belt made of elastic material, e.g. rubber. The traction element 12 and the cross-rib 11 are mutually connected by fastener devices, of which only one closed-head nut 14 is shown, said nut being screwed onto a bolt (not shown) as indicated at 13. Provided between the nut 14 and the surface of the traction element 12 proximal thereto is an abutment plate 15 that includes guide means 16 for the support wheels 17 that support the track 10 during movement of the vehicle.

Figure 2 is a cross-sectional view of a vehicle track 10 of the earlier described conventional kind, taken through a cross-rib. The cross-rib 11 is comprised of an homogenous rubber bar 18 which is clamped mechanically in a U-shaped metal bar 19, this bar being, in turn, secured mechanically to the traction element 12.

Figure 3 is a cross-sectional view taken on the line A-A in Figure 1. The vehicle track 10 includes a traction element 12 which has internally a longitudinally extending reinforcement 20 comprised of several layers of strain-absorbing material, such as aramide cord or fabric material that is dimensioned for a maximum stretch of 0.5%. The traction element 12 also includes pre-formed bolt holes 21 for receiving the cross-rib fastener devices 13. Although not shown, the traction element 12 also includes between the cross-ribs 11 longitudinally extending guide edges that function to prevent sideways movement of the track. The bolt holes 21 are reinforced with support plates 22 moulded in the polymeric material. The support plates 22 are comprised of a resilient, hard material, for instance steel or a composite material. Pre-formed around the bolt holes 21 in the traction element 12 are sealing rings 23 which function to prevent the ingress of moisture, dirt and like contaminants up and along the fastener bolts 13. The traction element 12 also includes a pre-formed conical aperture 24 which functions to localise the cross-ribs 11 in the traction element 12 in the manner of an abutment surface. This aperture 24 in the traction element 12, and correspondingly formed abutment surfaces 25 on the cross-ribs 11 have individual angles and are thus not completely parallel with one another, therewith obtaining pre-stressed or wedge-like abutment of said surfaces subsequent to tightening the cross-ribs 11.

The cross-ribs 11 are constructed around a closed profile construction 26 of high-quality steel, aluminium, magnesium or an appropriate composite material. Provided around the profile construction 26 is a polymeric material 27 that includes additional abutment pads 28 in that part of the rib 11 that comes into contact with the ground. This closed profile construction fully embraces an elongated cavity 29.

In addition to the components described with reference to Figure 3, Figure 4 illustrates a fastener bolt 13 which is welded to the profile construction 26 with welds 30. The bolt 13 is anchored and tightened with the aid of the closed-head nut 14 to prevent damage to the bolt 13. Glue is applied to the abutment surfaces 24, 25 prior to tightening the cross-rib fastener bolts 13 against the traction elements 12, so as to provide a fixed connection between the two polymer surfaces and therewith prevent the ingress of moisture and dirt in between the ribs and the traction element.

In addition to the advantages recited above with respect to reduced power requirement, etc., the preferred embodiments of the inventive vehicle track also provides the further advantages listed below:
- They are composed of prefabricated traction elements and cross-ribs.
- The use of different materials in the traction element and cross-ribs respective enable a track to be constructed and adapted to different vehicles and different terrains.
- The traction element and cross-ribs can be replaced individually when damaged or worn.
- The rib configuration and the material used in said ribs can be adapted to suit the functional requirements of the vehicle.
- Traction elements and cross-ribs are mutually secured with the aid of fastener bolts.
- The pre-formed abutment surfaces on ribs and traction elements have mutually different angles to ensure a clamping or wedge-like effect between the polymeric materials in respective abutment surfaces.
- The choice of polymer material used in the cross-ribs can be varied to achieve maximum operating properties under given operating conditions and terrains.
- The traction element has moulded in the vicinity of the bolt holes spring-steel plates which function to prevent the bolt from moving sideways.
- The traction element has pre-formed apertures that function to provide rib abutment surfaces that take-up tensile forces between ribs and traction element.
- The abutment surface beneath fastener nuts is adapted to provide guide means for the vehicle support wheels.
- The bending strength of the cross-ribs is equally as great in the *x* and they directions, i.e. in both a horizontal and a vertical direction.

## Claims

1. A vehicle track intended for tracked off-road vehicles for use in all types of terrain, both in hilly terrain and in wetland and on different types of ground surfaces, such as asphalt, concrete, gravel, sand, stone, snow and ice surfaces, wherein the track (10) includes one or more endless traction elements (12) made of an elastomeric material, and a plurality of essentially mutually equidistant cross-ribs (11) which are disposed transversely to the traction element or elements (12) and intended to have contact with the ground as the traced vehicle moves, and wherein at least those parts of the cross-ribs (11) which come into contact with the ground are comprised of a polymeric material (27) which is firmly held and supported by a flexurally rigid support device (26), **characterized** in that the support device (26) is a fully closed profile construction; and in that the polymer material (27) is applied to the outside of said profile construction.

2. A vehicle track according to Claim 1, **characterized** in that the fully closed profile construction (26) is comprised of a material selected from the group: high-quality steel, aluminium, magnesium or composite material, although it will preferably be a boron-alloyed high-strength steel.

3. A vehicle track according to Claim 1 or 2, **characterized** in that each cross-rib (11) includes a fastener device (13) by means of which the cross-rib (11) can be secured to a traction element (12).

4. A vehicle track according to Claim 3, **characterized** in that the fastener device (13) is a fastener bolt adapted to the profile construction (26) and welded to said profile construction or fastened thereto in some other way.

5. A vehicle track according to Claims 1-4, **characterized** in that the polymeric material (27) in the cross-ribs (11) is press-moulded around the fully closed profile construction (26).

6. A vehicle track according to Claims 1-5, **characterized** in that each cross-rib (11) has one flat and two or more inclined abutment surfaces (25) for coaction with corresponding surfaces on a respective traction element (12).

7. A vehicle track according to Claim 6, **characterized** in that the inclined abutment surfaces (24) of the cross-rib (11) and corresponding surfaces (25) on the traction element (12) are not fully parallel.

8. A vehicle track according to Claims 1-7, **characterized** in that each cross-rib (11) and/or traction element (12) can be replaced such as to enable the track to be adapted for different vehicle applications.

9. A vehicle track (10) for tracked off-road vehicles, including traction elements (12) and cross-ribs (11), **characterized** in that the track includes one or more endless traction elements (12) which are press-moulded from an elastomeric material and have moulded therein an endless reinforcement (20) comprised of a material that has a high tensile strength, for instance aramide fibre material, and pre-formed holes (21) for receiving fastener devices (13), and cross-rib abutment surfaces (25) and longitudinally extending guide edges that prevent sideways slipping of the vehicle track (10), wherein the traction element (12) has moulded in the vicinity of said holes (21) support plates (22) comprised of a resilient, hard material, wherein a plurality of generally mutually equidistant cross-ribs (12) comprised of press-moulded polymeric material (27) are disposed along the endless traction elements (12) and outwardly therefrom, wherein the cross-ribs (11) have abutment pads (28) comprised of said press-moulded material (27) in those parts of said ribs that come into contact with the ground, a plurality of fastener devices (13, 14) which hold the cross-ribs (11) steady and sealingly against the abutment surfaces (25) of the traction element (12) formed to this end, wherein said fastener devices comprise a bolt (13) which is anchored to a respective cross-rib (11) and a closed-head nut (14) and, when applicable, a glue joint in the mutually coacting abutment surfaces (24, 25) of respective cross-ribs and traction elements, therewith to provide a firm connection between the surfaces (24, 25) thereof and prevent the ingress of moisture and dirt in between the cross-ribs and traction elements.

10. A vehicle track according to Claim 9, **characterized** by an abutment plate (15) disposed between nut (13) and traction element (12), said abutment plate preferably including a guide means (16) for guiding the support wheels (17) of the track (10).

## Patentansprüche

1. Fahrzeugraupe für Raupengeländefahrzeuge zur Verwendung in allen Geländetypen, sowohl in hügeligem als auch in feuchtem Gelände und auf unterschiedlichen Typen von Bodenoberflächen, wie Asphalt-, Beton-, Kies-, Sand-, Stein-, Schnee- und Eisoberflächen, wobei die Raupe (10) ein oder mehrere Zugelemente (12) aus einem Elastomermaterial und mehrere im wesentlichen voneinander gleich beabstandete Querrippen (11) einschließt, welche quer zu dem endlosen Zugelement oder den endlosen Zugelementen (12) angeordnet und dazu bestimmt sind, Bodenberührung zu haben, wenn sich das Raupenfahrzeug bewegt, und wobei wenigstens jene Teile der Querrippen (11), die mit dem Boden in Berührung kommen, ein Polymermaterial (27) umfassen, welches durch eine biegestarre Stützeinrichtung (26) festgehalten und unterstützt wird, **dadurch gekennzeichnet,** daß die Stützeinrichtung (26) eine vollständig geschlossene Profilkonstruktion ist und das Polymermaterial (27) auf der Außenseite dieser Profilkonstruktion aufgebracht ist.

2. Fahrzeugraupe nach Anspruch 1, **dadurch gekennzeichnet,** daß die vollständig geschlossene Profilkonstruktion (26) einen Werkstoff umfaßt, der aus der Gruppe Stahl hoher Qualität, Aluminium, Magnesium oder eines Verbundwerkstoffes ausgewählt ist, wenngleich er vorzugsweise ein mit Bor legierter hochfester Stahl ist.

3. Fahrzeugraupe nach Anspruch 1 oder 2, **dadurch gekennzeichnet,** daß jede Querrippe (11) eine Befestigungseinrichtung (13) einschließt, mit Hilfe derer die Querrippe (11) an einem Zugelement (12) befestigt werden kann.

4. Fahrzeugraupe nach Anspruch 3, **dadurch gekennzeichnet,** daß die Befestigungseinrichtung (13) ein Befestigungsbolzen ist, der an die Profilkonstruktion (26) angepaßt und an die Profilkonstruktion angeschweißt oder in anderer Weise an ihr befestigt ist.

5. Fahrzeugraupe nach den Ansprüchen 1 bis 4, **dadurch gekennzeichnet,** daß das Polymermaterial (27) in den Querrippen (11) um die vollständig geschlossene Profilkonstruktion (26) preßgeformt ist.

6. Fahrzeugraupe nach den Ansprüchen 1 bis 5, **dadurch gekennzeichnet,** daß jede Querrippe (11) eine flache und zwei oder mehr geneigte Widerlagerflächen (25) für ein Zusammenwirken mit entsprechenden Oberflächen an einem jeweiligen Zugelement (12) hat.

7. Fahrzeugraupe nach Anspruch 6, **dadurch gekennzeichnet,** daß die geneigten Widerlagerflächen (24) der Querrippe (11) und entsprechende Oberflächen (25) an dem Zugelement (12) nicht vollständig parallel sind.

8. Fahrzeugraupe nach den Ansprüchen 1 bis 7, **dadurch gekennzeichnet,** daß jede Querrippe (11) und/oder jedes Zugelement (12) derart ausgetauscht werden kann, um zu ermöglichen, daß die Raupe an verschiedene Fahrzeuganwendungen angepaßt wird.

9. Fahrzeugraupe (10) für Raupengeländefahrzeuge mit Zugelementen (12) und Querrippen (11), **dadurch gekennzeichnet,** daß die Raupe ein oder mehrere endlose Zugelemente (12) einschließt, die aus einem Elastomermaterial preßgeformt sind und darin eingeformt eine Endlosverstärkung (20), die ein Material umfaßt, welches hohe Zugfestigkeit hat, wie beispielsweise Aramidfasermaterial, und vorgeformte Löcher (21) zur Aufnahme von Befestigungseinrichtungen (13) sowie Querrippenwiderlagerflächen (25) und sich längs erstreckende Führungskanten, die ein Seitwärtsgleiten der Fahrzeugraupe (10) verhindern, haben, wobei das Zugelement (12) in der Nähe der Löcher (21) geformte Stützplatten (22) aus einem elastischen, harten Material hat, wobei mehrere allgemein voneinander gleich beabstandete Querrippen (12) aus einem preßgeformten Polymermaterial (27) entlang den endlosen Zugelementen (12) und von diesen auswärts angeordnet sind, und wobei die Querrippen (11) Widerlagerpolster (28) aus dem preßgeformten Material (27) in jenen Teilen der Rippen haben, die mit dem Boden in Berührung kommen, mehrere Befestigungseinrichtungen (13, 14) einschließt, welche die Querrippen (11) ständig und dichtend gegen die geformten Widerlagerflächen (25) des Zugelementes (12) halten, wobei diese Befestigungseinrichtungen einen Bolzen (13), der an einer jeweiligen Querrippe (11) verankert ist, und eine Mutter (14) mit geschlossenem Kopf und gegebenenfalls eine Klebverbindung in den wechselweise zusammenwirkenden Widerlagerflächen (24, 25) jeweiliger Querrippen und Zugelemente umfassen, um damit eine feste Verbindung zwischen deren Oberflächen (24, 25) zu liefern und das Eindringen von Feuchtigkeit und Schmutz zwischen den Querrippen und Zugelementen zu verhindern.

10. Fahrzeugraupe nach Anspruch 9, gekennzeichnet durch eine Widerlagerplatte (15), die zwischen der Mutter (13) und dem Zugelement (12) angeordnet ist, wobei diese Widerlagerplatte vorzugsweise eine Führungseinrichtung (16) zum Führen der Stützräder (17) der Raupe (10) einschließt.

## Revendications

1. Chenille de traction pour véhicules destiné à des véhicules guidés tout terrain pour être utilisé sur n'importe quels genres de terrain, autant sur un terrain vallonné et aride que dans les marécages et sur différents types de surfaces, tel que les surfaces d'asphalte, de béton, de gravier, de sable, de pierre, enneigées et givrées, dans lequel la chenille (10) inclut un ou plusieurs éléments de traction sans fin (12) faits d'élastomère et d'une pluralité de nervures en croix essentiellement mutuellement équidistantes (11) qui sont disposées de façon transversale à l'élément ou aux éléments de traction (12) et destinées à entrer en contact avec le sol lorsque le véhicule guidé bouge, et où au moins ces parties des nervures en croix (11) qui entrent en contact avec le sol sont comprises d'un matériel polymère (27) lequel est fermement fixé et maintenu par un dispositif de support rigide flexible (26), caractérisé en ce que le dispositif de support (26) est une construction profilée totalement fermée; et en ce que le matériel polymère (27) est appliqué au-dehors de ladite construction profilée.

2. Chenille de traction pour véhicules selon la revendication 1, caractérisé en ce que la construction profilée totalement fermée (26) est comprise d'un matériel sélectionné du genre: acier de première qualité, aluminium, magnésium ou matériel composite, quoiqu'il serait préférable d'utiliser un acier à résistance mécanique aux températures élevées en alliage de bore.

3. Chenille de traction pour véhicules selon la revendication 1 ou 2, caractérisé en ce que chaque nervure en croix (11) inclut un dispositif d'attache (13) au moyen duquel la nervure en croix (11) peut être fixé à un élément de traction (12).

4. Chenille de traction pour véhicules selon la revendication 3, caractérisé en ce que le dispositif d'attache (13) est un verrou d'attache adapté à la construction profilée (26) et soudé à ladite construction profilée ou y est fixé de quelque autre façon.

5. Chenille de traction pour véhicules selon les revendications 1 à 4, caractérisé en ce que le matériel polymère (27) dans les nervures en croix (11) est moulé à pression autour de la construction profilée totalement fermée (26).

6. Chenille de traction pour véhicules selon les revendications 1 à 5, caractérisé en ce que chaque nervure en croix (11) a une surface plate et deux ou plusieurs surfaces d'aboutissement inclinées (25) pour agir conjointement avec les surfaces correspondantes sur un élément de traction respectif (12).

7. Chenille de traction pour véhicules selon la revendication 6, caractérisé en ce que les surfaces d'aboutissement inclinées (24) de la nervure en croix (11) et les surfaces correspondantes (25) sur l'élément de traction (12) ne sont pas totalement parallèles.

8. Chenille de traction pour véhicules selon les revendications 1 à 7, caractérisé en ce que chaque nervure en croix (11) et/ou élément de traction (12) peuvent être remplacés de telle manière de permettre au rail de s'adapter pour différentes applications de véhicule.

9. Chenille de traction pour véhicules (10) pour véhicules tout terrain, incluant des éléments de traction (12) et des nervures en croix (11), caractérisé en ce que la chenille inclut un ou plusieurs éléments de traction sans fin (12) qui sont moulés par pression à partir d'un élastomère et sont moulés dans un renforcement sans fin (20) compris d'un matériel qui a une haute résistance élastique, par exemple un matériel de fibre à aramide, et des trous préformés (21) pour recevoir des dispositifs d'attache (13), et des surfaces d'aboutissement de nervure en croix (25) et des bords de guidage s'étendant longitudinalement qui évitent le glissement latéral de la chenille (10), dans lequel l'élément de traction (12) est moulé dans la proximité des dits trous (21) des plaques de support (22) compris d'un résilient, matériel dur, dans lequel une pluralité de nervures en croix généralement mutuellement équidistantes (12) comprises de matériel polymère moulé par pression (27) est disposée le long des éléments de traction sans fin (12) et sur sa partie extérieure, dans lequel les nervures en croix (11) disposent d'amortisseurs d'aboutissement (28) compris de matériel dit moulé par pression (27) dans ces parties des dites nervures qui entrent en contact avec le sol, une pluralité de dispositifs d'attache (13,14) qui maintiennent les nervures en croix (11) uniformément et hermétiquement contre les surfaces d'aboutissement (25) de l'élément de traction (12) formé à cette fin, dans lequel lesdits dispositifs d'attache comprennent un verrou (13) qui est fixé à une nervure en croix respective (11) et un écrou à chapeau (14) et, une fois appliqué, une colle à joint dans les surfaces d'aboutissement d'action mutuelle (24, 25) des nervures en croix respectives et des éléments de traction, en outre pour fournir une connexion ferme entre les surfaces (24, 25) de ceux-ci et pour éviter l'entrée d'humidité et de poussière entre les nervures en croix et les éléments de traction.

10. Chenille de traction pour véhicules selon la revendication 9, caractérisé par une plaque d'aboutissement (15) disposée entre l'écrou (13) et l'élément de traction (12), ladite plaque incluant de préférence un moyen de guidage (16) pour guider les rouages de support (17) de la chenille (10).
